# EUROPEAN PATENT SPECIFICATION

(11) **EP 0 508 276 B1**
(45) Date of publication and mention of the grant of the patent: **04.01.1995**
(21) Application number: 92105513.3
(22) Date of filing: 31.03.1992
(51) Int. Cl.: B23D 47/04, B27B 5/06, B27B 5/20, B23D 59/00

(54) **Bilaterally acting pressure beam for a cutting machine**
Doppelseitig wirkende Druckbalken für eine Schneidmaschine
Poutre de pression pour une machine à couper, à action bilatérale

(30) Priority: 10.04.1991 IT GE910058
(43) Date of publication of application: 14.10.1992
(73) Proprietor: GIBEN IMPIANTI S.p.A., I-40065 Pianoro (Bologna) (IT)
(72) Inventor: Benuzzi, Piergiorgio, I-40100 Bologna (IT)
(74) Representative: Porsia, Bruno

(56) References cited:
- EP-A- 0 249 058
- EP-A- 0 328 740
- BE-A- 514 883
- US-A- 3 678 792
- US-A- 3 777 598

## Description

The invention relates to a bilaterally acting pressure beam for a cutting machine, which is suitable for a pressure to be applied to a to-be-sectioned panel or stack of panels of wood or any like sheet material, in the parallel direction to the cutting line, immediately upstream and downstream of this line. More particularly, the invention relates to a bilaterally acting pressure beam for a cutting machine, in which the pressure beam hold-down elements in form of hold-down plates which can be independently motivated, are guided at their end side edges by vertically arranged guides which are fixedly mounted onto the cutting machine frame end side members at the inward sides thereof.

A bilaterally acting pressure beam of this kind is known from the document EP-A-0249058. The known pressure beams are usually actuated by controls located close to both guided end side edges of the pressure beam, and are synchronized by means of pinion-and-rack, or sprocket-and-chain units, with the pinions or the sprockets being keyed onto the ends of a shaft longitudinally fitted on the pressure beam, and rotatably carried thereby.

In the known pressure beams the following drawbacks are however encountered: The pressure beam is scarcely rigid, owing to the considerable distance between the pressure beam ends at which a pressure is applied to the pressure beam, unless a very strong, and then costly, parallellism system is provided. The parallel condition of the pressure beam relative to the worktable, is hardly obtainable when one end portion of the pressure beam rubs against very narrow strips, since the pressure beam synchronizing system may be transversely deformed. The pressure beam is encumbered by the actuating means at both of its end side edges, so that it is difficult to place a grooving unit, so-called "post-forming" unit, for making a required groove or incision in a side of a panel, at one end side edge of the pressure beam. The pressure beam-actuating means have a very great height dimension, so that they adversely condition the height of the cutting machine. The pressure beam will fall down by the action of gravity, when no fluid under pressure is supplied into the pressure beam actuating means, which gives rise to conceivable inconveniences, unless additional safety systems are provided.

The invention obviates to these drawbacks by a bilaterally acting pressure beam for a cutting machine according to the preamble of claim 1, characterized in that the hold-down plates are each fitted with at least two suitably spaced apart rollers which are rotatably fitted on bolts fixedly secured by means of nuts to, and at right angles with the relative hold-down plate, so as to project from the inward side thereof, and are respectively engaged in the at least two slanted slots that perform a cam function, and are provided in the actuating plates for lifting and lowering the hold-down plates, and that the actuating plates supported and guided by a horizontally arranged plate, are arranged vertically in an adjacent relation with the hold-down plates, parallelly thereto, and are supported at their end side edges so as to be longitudinally movable, by the vertically arranged, fixedly mounted guides, the said actuating plates being selectively driven by the respective one of the two horizontally arranged, fluid pressure-operated, double-acting, cylinder-and-piston units, which are preferably supported by the cutting machine frame end side member, at the outward side thereof, the whole arrangement being such that the hold-down plates will be motivated by the actuating plates so as to be lifted and lowered as required, by means of their at least two rollers which are respectively engaged in the at least two slanted slots provided in the actuating plates, and are moved in the longitudinal direction of the hold-down plates.

Further improvements of the invention, and the advantages arising therefrom, will become clearly apparent in the following disclosure of one preferred embodiment thereof, which is shown merely by way of a non-limiting example in the annexed drawings, in which:
Figure 1 is a side elevational view showing a cutting machine with the pressure beam in its lowered down position.
Figure 2 is a side elevational view showing the pressure beam in its uplifted position.
Figure 3 is a top plan view showing the cutting machine with the pressure beam in its lowered down position.
Figure 4 is a cross-sectional view of the pressure beam, taken on line IV-IV in Figure 1.

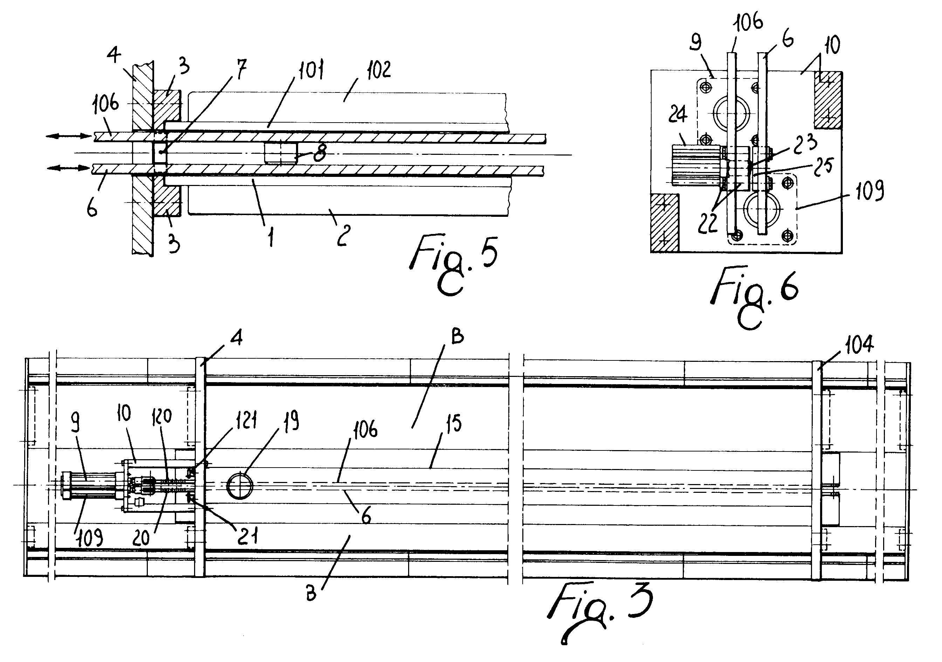

Figure 5 is a sectional view taken on line V-V in Figure 1, showing some details of the pressure beam.
Figure 6 is an enlarged, partly cross-sectional view taken on line VI-VI in Figure 1, showing the device for locking one of the pressure beam hold-down elements in form of hold-down plates, in respect of the other hold-down plate.

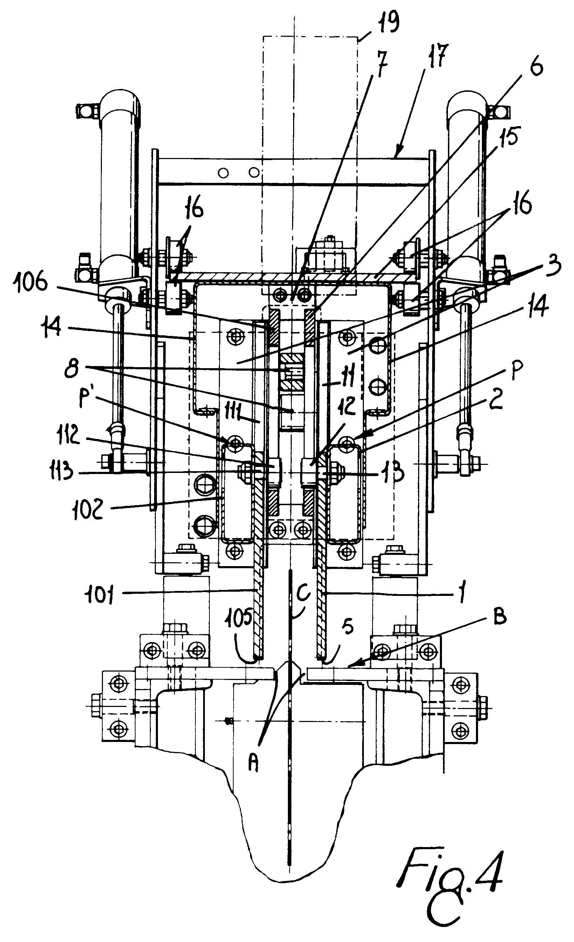

In Figure 4, reference letter A denotes the slot-like rectilinear aperture formed in the workpiece table B of the cutting machine, through which the cutting disc saw C is raisable, and is caused to run therealong. The two pressure beam hold-down elements P, P' which are pressed on the workpiece table B at a same short distance from the slot-like aperture A, are in form of equally sized hold-down plates 1, 101 which can be independently motivated. The two hold-down plates 1, 101 are arranged vertically in mutually parallel relation, and are so long as to extend throughout the length of the said slot-like aperture A.

The hold-down plates 1, 101 are both stiffened by means of profiled tubular members 2, 102 which are arranged longitudinally of the hold-down plates, and are secured to the the median/upper portion of their outward side.

The end side edges of the hold-down plates 1, 101 may be suitably machined, or their end side edges may be provided with machined sliding blocks of a suitable material, or with rollers, not shown. The hold-down plates are guided at their end side edges that are suitably machined or are provided with sliding blocks or with rollers, by the vertically arranged guides 3, 103 fixedly mounted onto the inward side of the end side members 4, 104 of the cutting machine frame. Thus, the hold-down plates can be guidedly lifted and lowered in a parallel condition to the workpiece table B.

The lower side edge of the hold-down plates 1, 101 that is caused to contact the panel or panel stack to be sectioned, is fitted with inserted strips 5, 105 of rubber or of any other suitable material, or with inserted small blocks of aluminum, not shown, which protrude from the inward side of the hold-down plates 1, 101, so that the pressing action of the hold-down plates will be exerted more nearly to the cutting line.

Two equally sized actuating plates 6, 106 for lifting and lowering the hold-down plates 1, 101, supported and guided by a horizontally arranged plate 15, are arranged vertically in an adjacent relation with the inward side of the respective hold-down plate, parallelly thereto. The actuating plates 6, 106 are supported at their end side edges so as to be longitudinally movable, and guided by the vertically arranged guides 7, 107, and also by the vertically arranged guides 3, 103, which are all fixedly mounted onto the inward side of the respective cutting machine end side member 4, 104. The guides 7, 107, are "T"-shaped, and are each formed with an opening for the end side portion of the relative actuating plate, which is turned toward the said guides 7, 107, to be allowed to pass through this opening, when the actuating plates are being longitudinally moved. The actuating plates 6, 106 may be even set in contact with the hold-down plates 1, 101, so that these latter plates will serve as means for supporting the actuating plates from the outward sides thereof.

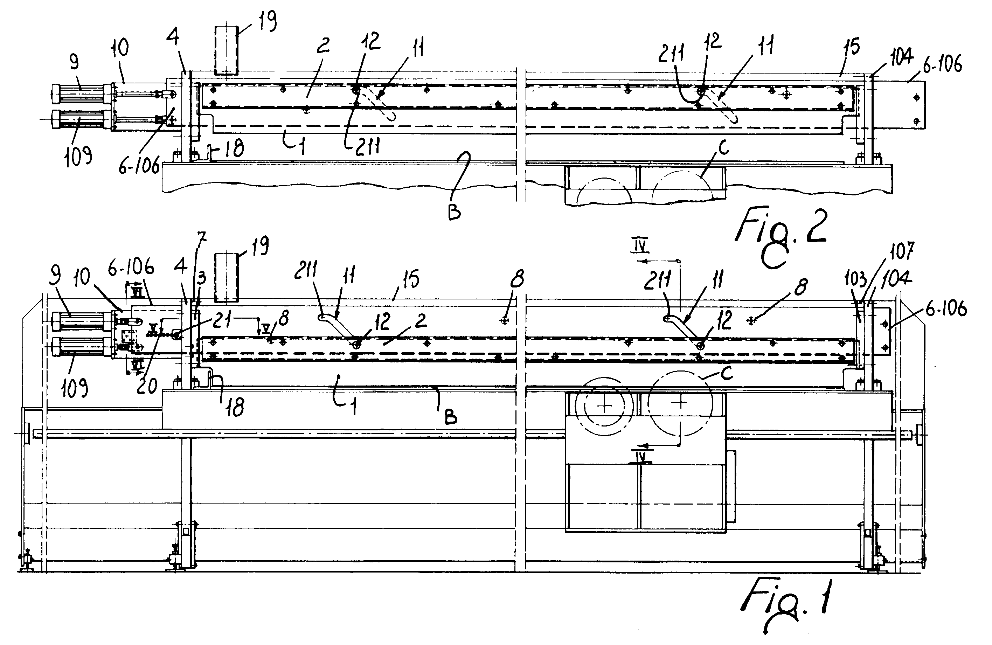

The actuating plates 6, 106 are properly spaced apart from each other by means of spacers 8 of an appropriate material with a low coefficient of friction, which are fastened to the inward side of at least one of the actuating plates 6, 106, and are suitably arranged thereon over the entire longitudinal and transverse extent thereof, as shown in Figure 1. The said spacers are provided for preventing the actuating plates 6, 106 from being inwardly deformed under a bending stress.

Suitable means are provided for longitudinally moving the actuating plates 6, 106 in a selective manner. As shown in Figures 3 and 6, the said means consist of two fluid pressure-operated, double-acting cylinder-and-piston units 9, 109 which are suitably offset from each other, and are secured by their bodies to a frame 10 having a "U"-shape in plan view, which in turn is preferably secured to the outward side of the cutting machine frame end side member 4.

As shown in Figures 1, 2, and 4, at least two equally long slanted slots 11, 111 are formed in each actuating plate 6, 106 at a distance from the end guides 3, 103, and 7, 107, which may be approximately one-sixth of the length of the actuating plates, from both end sides thereof. The slanted slots 11, 111 are preferably inclined by about 45° and are provided with a horizontal, or substantially horizontal upper end section 211. The slots 11, 111 perform a cam function, and are respectively engaged by the at least two rollers 12, 112 which are rotatably fitted on bolts 13, 113 fixedly secured by means of nuts to, and at right angles with the relative pressure beam hold-down plate 1, 101, so as to project from the inward side thereof. Bores are provided in the hold-down plates-stiffening, profiled tubular members 2, 102 for permitting the access to the said nuts by which the said bolts 13, 113 are fixedly secured to the hold-down plates 1, 101.

In Figures 1 and 2 there clearly appears that owing to the actuating plates 6, 106 being longitudinally moved by the respective cylinder-and-piston unit 9, 109, the pressure beam hold-down plates 1, 101 will be lowered or lifted, according to whether the lower or upper portion of the slanted slots 11, 111 is being gradually caused to coincide with a vertical line perpendicular to the axis of rollers 12, 112. By their rollers 12, 112 having been moved into the respective upper end section 211 of slots 11, 111, the uplifted hold-down plates 1, 101 will be stably held in their uplifted position, even when no fluid under pressure is supplied into the cylinder-and-piston units 9, 109 for longitudinally moving the actuating plates 6, 106. The upper end section 211 of slots 11, 111 may be slightly inclined toward the left-hand side of Figures 1 and 2, or may be provided with a small recess, whereby the pressure beam hold-down plates 1, 101 will be more safely held in their uplifted position.

The bolts 13, 113 on which the rollers 12, 112 are rotatably fitted, are arranged in eccentric positions, so that these rollers, and then the pressure beam hold-down plates 1, 101 can be selectively lifted and lowered even by small amounts, and the parallel condition of the hold-down plates 1, 101 in respect of the workpiece table B can be accurately adjusted

The pressure beam components 1, 101; 6, 106 with the respective rollers 12, 112 and slots 11, 111, which are located between the cutting machine frame end side members 4, 104, are housed in a self-supporting casing 14 having substantially an upturned-"U" profile, and being fixedly mounted onto the cutting machine frame end side members 4, 104, onto which the horizontally arranged plate 15 for supporting and guiding the actuating plates 6, 106, is also fixedly mounted, the carriage 16 of the movable aligning device 17, of known type, being caused to slide on this plate 15. In this instance, the casing 14 serves also for stiffening the plate 15. If desired, the said plate 15 may be utilized as a structural member of casing 14.

The inward sides of casing 14 are caused to cooperate with a little play and then in a substantially fluid-tight condition, with the outward sides of the hold-down plates 1, 101 and the respective profiled tubular members 2, 102 for stiffening the hold-down plates 1, 101. A tunnel 19 is provided at and over the end side of casing 14 which is contiguous to the stationary aligning device 18, and is never reached by the carriage 16 of the movable aligning device 17. The tunnel 19 is connected to the plant for sucking any saw dusts resulting from the cutting operations.

The advantages of the pressure beam according to the invention, as compared with the prior art pressure beams, can be summarized as follows.

A higher stiffness of the pressure beam is afforded, in that the pressure as applied to its hold-down plates 1, 101 for pushing a panel or panel stack to be sectioned against the workpiece table B of the cutting machine, is not applied as in the prior art pressure beams, at the ends of the hold-down plates, but is applied at the two cooperating slots and rollers 11, 111; 12, 112, that are provided in intermediary positions at a distance preferably of about 800 millimeters from the guided end side edges of the hold-down plates 1, 101, so that a much reduced median section is left in these plates, which is then less deformable under a bending stress. If the pressure beam is considerably long, the cooperating slots and rollers 11, 111; 12, 112, at which a pressure is applied, may be more than two in number, so that any reactions of the hold-down plates median sections will be considerably reduced.

A perfectly parallel condition of the pressure beam hold-down plates 1, 101 in respect of the cutting machine workpiece table B, is ensured by the pressure beam actuating system, even when very narrow strips closely contacting the stationary aligning device 18, are being cut.

The actuating plates 6, 106 for lifting and lowering the pressure beam hold-down plates 1, 101 are driven by only one respective fluid pressure-operated, double acting cylinder-and-piston unit 9, 109, not by two, as in the prior art. The two cylinder-and-piston units 9, 109 may be mounted at will on one of the cutting machine frame end side members 4, 104, so that a grooving unit, so-called "post-forming" unit, for making a groove or incision in a panel, may be fitted at the other cutting machine frame end side member.

Moreover, the two cylinder-and-piston units 9, 109 are arranged horizontally, not vertically as in the prior art cutting machines, so that it is possible to considerably reduce the height dimension of the cutting machine according to the invention.

The pressure beam hold-down plates 1, 101 are mechanically held in their uplifted position even when no fluid under pressure is supplied into the two cylinder-and-piston units 9, 109.

Additionally to the aforementioned advantages, the following advantages are afforded as follows:
As shown in Figures 1, 2, and 3, the control device provided for detecting the amount of the downward travel of the pressure beam components 6, 106 and 1, 101, and for causing the disc saw C of the cutting machine to be proportionately raised, is preferably located on the outward side of the cutting machine frame end side member 4, near to the two cylinder-and-piston units 9, 109 for driving the respective actuating plate 6, 106. The said control device consists of a longitudinal row of equally spaced apart holes 20, 120 for each actuating plate 6, 106, which is provided in the end section thereof that is turned toward the respective cylinder-and-piston unit 9, 109. The said holes 20, 120 are sensed by stationary sensors 21, 121 which are fixedly mounted on the outward side of the cutting machine frame end side member 4, and are associated with a computer that causes the disc saw C to be raised according to the detected amount by which the pressure beam hold-down plates 1, 101 have been lowered by the actuating plates 6, 106, and then according to the thickness of the panel or stack of panels to be sectioned. Of course, any suitable linear transducer of known type may be used in place of the just described control device.

As shown in Figures 1 and 6, next to the said control device a locking device is provided at the end side of the actuating plates 6, 106, which is turned toward the cylinder-and-piston units 9, 109. The locking device is for selectively locking one of the two pressure beam hold-down plates 1, 101 with respect to the other hold-down plate, at a short distance from a panel or a panel stack to be sectioned. Therefore, the locking device prevents the locked hold-down plate from being pushed against the being-sectioned panel or panel stack, so that any disarrangement of this panel or panel stack is avoided, the thus locked hold-down plate being caused to close the tunnel 19 through which saw dust is sucked.

The said locking device comprises: a small guide 22 preferably secured to the end of the one actuating plate 106, lying at the cutting machine frame end side member 4; a sliding bar 23 arranged perpendicularly to the other actuating plate 6, which is fitted on the guide 22 and is actuated by a fluid pressure-operated, double-acting cylinder-and-piston unit 24 fastened to the said guide 22; a platelet 25 secured to the other actuating plate 6, so as to project from the side surface thereof which is turned toward the sliding bar 23, and is located near to the said sliding bar 23.

With the pressure beam hold-down plates 1, 101 being motivated at a short delay between them, the sliding bar 23 is actuated by the cylinder-and-piston unit 24, so as to be driven against the facing side of platelet 25. Therefore, the hold-down plate 1 or 101 that has been motivated after the first-motivated hold-down plate, will be locked by the said sliding bar 23 at a short distance from a panel or a panel stack in the course of being sectioned, and the tunnel 19 through which saw dust is sucked, will be closed by the thus locked hold-down plate. By means of one locking device for both of the actuating plates 6, 106, one of the hold-down plates 1, 101 can be selectively locked.

By the described technique, it is possible to make a bilaterally acting pressure beam with synchronized hold-down plates 1, 101. In this instance, the actuating plates 6, 106 for lifting and lowering the hold-down plates 1, 101 are driven by only one cylinder-and-piston unit 9, which is preferably connected to the actuating plates 6, 106 with the interposition of compensation elastic means.

## Claims

1. A bilaterally acting pressure beam for a cutting machine, in which the pressure beam hold-down elements (P, P') in form of hold-down plates (1, 101) which can be independently motivated, are guided at their end side edges by vertically arranged guides (3, 103) which are fixedly mounted onto the cutting machine frame end side members (4, 104), at the inward sides thereof, characterized in that the hold-down plates (1, 101) are each fitted with at least two suitably spaced apart rollers (12, 112) which are rotatably fitted on bolts (13, 113) fixedly secured by means of nuts to, and at right angles with the relative hold-down plate (1, 101), so as to project from the inward side thereof, and are respectively engaged in the at least two slanted slots (11, 111) that perform a cam function, and are provided in the actuating plates (6, 106) for lifting and lowering the hold-down plates (1, 101), and that the actuating plates (6, 106) supported and guided by a horizontally arranged plate (15), are arranged vertically in an adjacent relation with the hold-down plates (1, 101), parallelly thereto, and are supported at their end side edges so as to be longitudinally movable, by the vertically arranged, fixedly mounted guides (7, 107; 3, 103), the said actuating plates (6, 106) being selectively driven by the respective one of the two horizontally arranged, fluid pressure-operated, double-acting, cylinder-and-piston units (9, 109), which are preferably supported by the cutting machine frame end side member (4), at the outward side thereof, the whole arrangement being such that the hold-down plates (1, 101) will be motivated by the actuating plates (6, 106) so as to be lifted and lowered as required, by means of their at least two rollers (12, 112) which are respectively engaged in the at least two slanted slots (11, 111) provided in the actuating plates (6, 106), and are moved in the longitudinal direction of the hold-down plates (1, 101).

2. The pressure beam according to claim 1, characterized in that the actuating plates (6, 106) are arranged on the inward side of the pressure beam hold-down plates (1, 101), at a short distance therefrom or substantially in contact therewith, and are guided at their end side edges by the vertically arranged, fixedly mounted guides (7, 107), and also by the guides (3, 103) for guiding the end side edges of the hold-down plates (1, 101) when being vertically moved, and spacers (8) are provided for suitably spacing apart the actuating plates (6, 106), the said spacers (8) being fastened to at least one of the actuating plates (6, 106), and being suitably arranged thereon over the longitudinal and transverse extent thereof, whereby the actuating plates are prevented from being inwardly deformed under a bending stress.

3. The pressure beam according to claim 1, characterized in that the vertically arranged pressure beam hold-down plates (1, 101) are respectively stiffened at the median/upper portions of their outward sides by profiled tubular members (2, 102), and bores are provided in the said profiled tubular members (2, 102) for permitting the access to the nuts by which the bolts (13, 113) rotatably supporting the rollers (12, 112), are fixedly secured to the inward side of hold-down plates (1, 101), at right angles therewith.

4. The pressure beam according to claim 3, characterized in that the bolts (13, 113) for rotatably supporting the rollers (12, 112) fitted on the hold-down plates (1, 101), and engaged in the slots (11, 111) provided in the actuating plates (6, 106), are arranged in such eccentric positions that the parallel condition of the pressure beam hold-down plates (1, 101) can be accurately adjusted in respect of the workpiece table (B) of the cutting machine.

5. The pressure beam according to claim 1, characterized in that the slanted slots (11, 111) in the actuating plates (6, 106) are each provided with an upper end section (211) which may extend horizontally, or may be slightly inclined to one side, or may be formed with a small recess, for the pressure beam hold-down plates (1, 101) to be safely held in their uplifted position by their rollers (12, 112) having been moved into the respective upper end section (211) of the slanted slots (11, 111), even when no fluid under pressure is supplied into the cylinder-and-piston units (9, 109) for driving the actuating plates (6, 106).

6. The pressure beam according to claim 1, characterized in that the pressure beam components (1, 101; 6, 106) located between the cutting machine frame end side members (4, 104), are housed in a self-supporting casing (14) having substantially an upturned-"U" profile, and being fixedly mounted onto the cutting machine frame end side members (4, 104), onto which the horizontally arranged plate (15) is also fixedly mounted, the carriage (16) of the movable aligning device (17) being caused to slide on the said plate (15), which may be incorporated in any suitable manner in the casing (14), the inward sides of casing (14) being caused to cooperate with a little play with the outward sides of the pressure beam hold-down plates (1, 101) and the profiled, respective tubular members (1, 2), and a tunnel (19) being provided at and over one end of casing (14), and being connected to the plant for sucking the saw dust resulting from the cutting operations.

7. The pressure beam according to claim 1, characterized in that the control device for detecting the amount of the downward travel of the hold-down plates (1, 101), and for causing the disc saw (C) to be proportionately raised, consists of a longitudinal row of equally spaced apart holes (20, 120) for each actuating plate (6, 106), which is preferably provided in the end section thereof that is turned toward the respective cylinder-and-piston unit (9, 109), and the said holes (20, 120) are sensed by stationary sensors (21, 121) which are preferably fixed on the outward side of the cutting machine frame end side member (4), and are associated with a computer that causes the disc saw (C) to be raised according to the detected amount by which the pressure beam hold-down plates (1, 101) have been lowered by the actuating plates (6, 106), and then according to the thickness of the panel or stack of panels to be sectioned, any suitable linear transducer of known type being of course usable in place of the said control device.

8. The pressure beam according to claim 1, characterized in that a locking device is preferably provided at the end sides of the actuating plates (6, 106) which are connected to the cylinder-and-piston units (9, 109), and comprises: a small guide (22) preferably secured to the end side of the one actuating plate (106), lying at the cutting machine frame end side member (4); a sliding bar (23) arranged perpendicularly to the other actuating plate (6), which is fitted on this guide (22), and is actuated by a fluid pressure-operated, double-acting cylinder-and-piston unit (24) fastened to the said guide (22); a platelet (25) which is secured to the other actuating plate (6), so as to project from the side surface thereof which is turned toward the sliding bar (23), and is located near to the said sliding bar (23), the sliding bar (23) when actuated by the cylinder-and-piston unit (24), being driven against the facing side of platelet (25), so that the hold-down plate (1 or 101) which has been motivated with a proper delay after the first-motivated hold-down plate, will be locked by the said sliding bar (23) at a short distance from a panel or a panel stack in the course of being sectioned, and the tunnel (19) through which saw dust is sucked, will be closed by the locked hold-down plate.

9. The pressure beam according to claim 1, characterized in that when the two hold-down plates (1, 101) are not independently motivated, but are synchronized, the actuating plates (6, 106) are connected either directly, or with the interposition of compensation elastic means, to only one fluid-pressure operated, double-acting cylinder-and-piston unit (9).

## Patentansprüche

1. Doppelseitig wirkender Druckbalken für eine Schneidmaschine, bei dem Druckbalkenniederhalteelemente (P, P') in Form von Niederhalteplatten (1, 101), die unabhängig voneinander bewegbar sind, an ihren Endseitenkanten durch vertikal angeordnete Führungen (3, 103) geführt sind, die fest an Endseitenteilen (4, 104) des Schneidmaschinenrahmens, an deren Innenseiten, montiert sind, **dadurch gekennzeichnet,** daß die Niederhalteplatten (1, 101) jede mit mindestens zwei zweckgerecht voneinander abständigen Rollen (12, 112) verbunden sind, die drehbar auf Schrauben (13, 113) angeordnet sind, die mittels Muttern an und im rechten Winkel zu den Niederhalteplatten (1, 101) befestigt sind, so daß sie von deren Innenseite vorstehen und die jeweils mit den mindestens zwei Schrägschlitzen (11, 111) in Eingriff stehen, die Kurvenstückfunktion erfüllen und die in Betätigungsplatten (6, 106) zum Heben und Senken der Niederhalteplatten (1, 101) angeordnet sind, und daß ferner die Betätigungsplatten (6, 106), die gehalten und geführt durch eine horizontal angeordnete Platte (15) sind, vertikal in angrenzender Lage zu den Niederhalteplatten (1, 101) parallel dazu, angeordnet sind und die an ihren Endseitenkanten so durch die vertikal angeordneten, feststehenden Führungen (7, 107; 3, 103) gehalten sind, daß sie in Längsrichtung bewegbar sind, wobei die genannten Betätigungsplatten (6, 106) selektiv durch jeweils eines von zwei horizontal angeordneten, druckbetätigten, doppelt wirkenden hydraulischen Zylinder-KolbenEinheiten (9, 110) betätigbar sind, die vorzugsweise durch das Endseitenteil (4) an dessen Außenseite getragen sind, wobei ferner die ganze Anordnung so getroffen ist, daß die Niederhalteplatten (1, 101) durch die Betätigungsplatten (6, 106) im Sinne ihrer Anhebung und Absenkung mittels ihrer mindestens zwei Rollen (12, 112) betätigt werden, die jeweils in den mindestens zwei Schrägschlitzen (11, 111) liegen, die in den Betätigungsplatten (6, 106) angeordnet sind und in Längsrichtung der Niederhalteplatten (1, 101) bewegt werden.

2. Druckbalken nach Anspruch 1, dadurch gekennzeichnet, daß die Betätigungsplatten (6, 106) an den Innenseiten der Druckbalkenniederhalteplatten (1, 101) in einem kurzen Abstand davon oder im wesentlichen im Kontakt mit ihnen angeordnet sind und sie an ihren Endseitenkanten durch die vertikal angeordneten, ortsfest montierten Führungen (7, 107) und auch durch die Führungen (3, 103) zur Führung der Endseitenkanten der Niederhalteplatten (1, 101), wenn diese vertikal bewegt werden, geführt sind, und daß Abstandsstücke (8) für ein zweckgerichtetes Abständighalten der Betätigungsplatten (6, 106) vorgesehen sind, wobei diese Abstandshalter (8) an mindestens einer der Betätigungsplatten (6, 106) befestigt sind und daran zweckgerecht über deren Längs- und Quererstreckung vorgesehen sind, wodurch die Betätigungsplatten an einer nach innen gerichteten Verformung unter Biegelast gehindert sind.

3. Druckbalken nach Anspruch 1, dadurch gekennzeichnet, daß die vertikal angeordneten Druckbalkenniederhalteplatten (1, 101) jeweils an medianen/oberen Abschnitten ihrer Außenseiten durch profilierte rohrförmige Teile (2, 102) versteift sind und Bohrungen in diesen profilierten rohrförmigen Teilen (2, 102) vorgesehen sind, um den Zugang zu den Muttern zu ermöglichen, mit denen die die Rollen (12, 112) tragenden Schrauben (13, 113) an den Innenseiten der Niederhalteplatten (1, 101) im rechten Winkel zu diesen, befestigt sind.

4. Druckbalken nach Anspruch 3, dadurch gekennzeichnet, daß die Schrauben (13, 113) für die drehbare Halterung der Rollen (12, 112), die mit den Niederhalteplatten (1, 101) verbunden sind und mit den in den Betätigungsplatten (6, 106) vorgesehenen Schlitzen (11, 111) in Eingriff stehen, in einer derart exzentrischen Lage angeordnet sind, daß die Parallelstellung der Druckbalkenniederhalteplatten (1, 101) bezüglich des Werkstücktisches (B) der Schneidmaschine exakt eingestellt werden kann.

5. Druckbalken nach Anspruch 1, dadurch gekennzeichnet, daß die Schrägschlitze (11, 111) in den Betätigungsplatten (6, 106) jeder mit einem oberen Endabschnitt (211) versehen ist, der sich horizontal erstrecken kann, oder leicht geneigt zu einer Seite sein kann oder mit einer schmalen Aussparung versehen sein kann, um die Druckbalkenniederhalteplatten (1, 101) sicher in ihrer durch die Rollen (12, 112) angehobenen Stellung zu halten, die in den jeweiligen oberen Endabschnitt (211) der Schrägschlitze (11, 111) bewegt sind, auch dann, wenn die Zylinder-Kolben-Aggregate (9, 109) für den Antrieb der Betätigungsplatten (6, 106) nicht mit Hydraulikdruck gespeist sind.

6. Druckbalken nach Anspruch 1, dadurch gekennzeichnet, daß die Druckbalkenteile (1, 101; 6, 106), die zwischen den Endseitenteilen (4, 104) des Schneidmaschinenrahmens liegen, in einem selbsttragenden Gehäuse (14) untergebracht sind, das im wesentlichen das Profil eines nach oben gedrehten "U" hat und das fest an den Endseitenteilen (4, 104) des Schneidmaschinenrahmens montiert ist, woran die horizontal angeordnete Platte (15) ebenfalls fest montiert ist, wobei der Wagen (16) der bewegbaren Ausrichtvorrichtung (17) auf der genannten Platte (15) gleitet, die in geeigneter Weise in das Gehäuse (14) eingesetzt ist, wobei die Innenseiten des Gehäuses (14) mit kleinem Spiel mit den Außenseiten der Druckbalkenniederhalterplatten (1) und den jeweiligen profilierten rohrförmigen Teilen (2, 102) zusammenwirken und ein Kanal (19) an und über einem Ende des Gehäuses (14) vorgesehen ist, der mit der Anlage zum Ansaugen des Sägestaubes verbunden ist, der aus den Schneidvorgängen anfällt.

7. Druckbalken nach Anspruch 1, dadurch gekennzeichnet, daß die Steuervorrichtung zum Erfassen der Größe der Abwärtsbewegung der Niederhalteplatten (1, 101) und für die Ingangsetzung einer proportionalen Anhebung der Kreissäge (C) eine Längsreihe gleichabständiger Löcher (20, 120) für jede Betätigungsplatte (6, 106) aufweist, die vorzugsweise in dem Endabschnitt der Platte angeordnet ist, der dem jeweiligen Zylinder-Kolben-Aggregat (9, 109) zugewandt ist, wobei die genannten Löcher (20, 120) sensorisch durch ortsfeste Sensoren (21, 121) erfaßt werden, die vorzugsweise auf der Außenseite der Endseitenteile (4) des Schneidmaschinenrahmens befestigt sind und die mit einem Computer verbunden sind, der ein Anheben der Kreissäge (10) entsprechend dem festgestellten Betrag der Absenkung der Druckbalkenniederhalteplatten (1, 101) durch die Betätigungsplatten (6, 106) entspricht, und dann entsprechend der Dicke des Paneels oder des Paneelstapels, das zertrennt werden soll, wobei ein geeigneter Lineartransducer bekannter Bauweise die Steuervorrichtung ersetzen kann.

8. Druckbalken nach Anspruch 1, dadurch gekennzeichnet, daß eine Blockiervorrichtung vorzugsweie an den Endseiten der Betätigungsplatten (6, 106) vorgesehen ist, die mit den Zylinder-Kolben-Aggregaten (9, 109) verbunden sind und die beinhaltet: eine schmale Führung (22) vorzugsweise befestigt an der Endseite einer der Betätigungsplatten (106), die an dem Endseitenteil (4) des Schneidmaschinenrahmens liegt; eine Gleitstange (23), senkrecht zu der anderen Betätigungsplatte (6) angeordnet, die an dieser Führung (22) angeordnet ist und die durch ein doppelt wirkendes, hydraulikdruck-betätigtes Zylinder-Kolben-Aggregat (24) betätigbar ist, das an der Führung (22) befestigt ist; eine kleine Platte (25), die an der anderen Betätigungsplatte (6) derart befestigt ist, daß sie von der Seitenoberfläche, die der Gleitstange (23) zugewandt ist, vorsteht und die nahe dieser Gleitstange (23) liegt, so daß die Gleitstange (23), wenn sie durch das Zylinder-Kolben-Aggregat (24) betätigt ist, gegen die zugewandt liegende Fläche der kleinen Platte (25) getrieben wird, so daß die Niederhalteplatte (1 oder 101) die mit einer geeigneten Verzögerung nach der zuerst bewegten Niederhalteplatte bewegt worden ist, durch die genannte Gleitstange (23) in kurzem Abstand von dem Paneel oder dem Paneelstapel, das durchtrennt werden soll, blockiert wird und der Kanal (19), durch den der Sägestaub abgesaugt wird, durch die blockierte Niederhalteplatte geschlossen ist.

9. Druckbalken nach Anspruch 1, dadurch gekennzeichnet, daß, wenn die beiden Niederhalteplatten (1, 101) nicht unabhängig bewegt, sondern synchron bewegt werden, die Betätigungsplatten (6, 106) entweder direkt oder unter Zwischenschaltung elastischer Kompensationsmittel mit nur einem hydraulikdruckbetätigten doppelt wirkenden Zylinder-Kolben-Aggregat verbunden sind.

## Revendications

1. Poutre de pression à action bilatérale pour une machine de coupe, dans laquelle les éléments de serrage (P, P') de la poutre de pression, formés par deux plaques de serrage (1, 101) qui peuvent être déplacées de manière indépendante, sont guidés à leurs extrémités latérales par des glissières (3, 103) fixées sur les faces intérieures des montants d'extrémité latérale (4, 104) du bâti de la machine de coupe, caractérisée en ce que les plaques de serrage (1, 101) sont chacune munies d'au moins deux galets (12, 112) espacés de manière appropriée, lesquels sont fixés de manière pivotante sur des boulons (13, 113) qui sont fermement fixés au moyen d'écrous à la plaque de serrage (1, 101) respective, à angle droit avec cette dernière, en sorte de venir en saillie sur la face intérieure de la plaque de serrage respective, et s'engagent respectivement dans au moins deux rainures inclinées (11, 111) formant chemin de came, agencées dans les plaques d'actionnement (6, 106) pour soulever et abaisser les plaques de serrage (1, 101), et en ce que les plaques d'actionnement (6, 106), portées et guidées par une plaque (15) disposée horizontalement, sont disposées verticalement de manière adjacente aux plaques de serrage (1, 101), parallèlement à ces dernières, et sont portées à leurs extrémités latérales, de sorte à être mobiles longitudinalement, par les glissières (7, 107 ; 3, 103) fixes disposées verticalement, lesdites plaques d'actionnement (6, 106) étant sélectivement actionnées par l'un respectif de deux ensembles (9, 109) formant cylindre et piston disposés horizontalement, actionnés par un fluide sous pression et à double effet, lesdits ensembles étant avantageusement portés par le montant d'extrémité latérale (4) du bâti de la machine de coupe sur la face extérieure dudit montant, l'ensemble étant tel que les plaques de serrage (1, 101) sont déplacées par les plaques de guidage (6, 106) de manière à être soulevées et abaissées à la demande, au moyen d'au moins leurs deux galets (12, 112) qui sont respectivement engagés dans au moins les deux rainures inclinées (11, 111) ménagées dans les plaques d'actionnement (6, 106), ces dernières étant déplacées dans la direction longitudinale des plaques de serrage (1, 101).

2. Poutre de pression selon la revendication 1, caractérisée en ce que les plaques d'actionnement (6, 106) sont disposées sur les faces intérieures des plaques de serrage (1, 101) de la poutre de pression, à une faible distance de celles-ci ou sensiblement en contact avec elles, et sont guidées à leurs extrémités latérales par les glissières (7, 107) fixes agencées verticalement, et également par les glissières (3, 103) de guidage des extrémités latérales des plaques de serrage (1, 101) dans leurs mouvements verticaux, et en ce que des pièces d'écartement (8) sont prévues pour espacer de manière appropriée les plaques d'actionnement (6, 106), lesdites pièces d'écartement (8) étant fixées à au moins l'une des plaques d'actionnement (6, 106) et disposées de manière appropriée sur toute l'étendue, longitudinalement et transversalement, de ces dernières, les plaques d'actionnement étant ainsi prémunies d'une déformation intérieure consécutive à une contrainte de flexion au moyen desdites pièces d'écartement.

3. Poutre de pression selon la revendication 1, caractérisée en ce que les plaques de serrage disposées verticalement (1, 101) sont renforcées à la partie médiane/supérieure de leurs faces extérieures par des organes tubulaires profilés (2, 102), et en ce que des trous sont ménagés dans lesdits organes tubulaires profilés (2, 102) pour permettre l'accès aux écrous au moyen desquels les boulons (13, 113) portant les galets (12, 112) sont fixés à la face intérieure des plaques de serrage (1, 101) perpendiculairement à celles-ci.

4. Poutre de pression selon la revendication 3, caractérisée en ce que les boulons (13, 113), portant les galets (12, 112) agencés sur les plaques de serrage (1, 101) et engagés dans les rainures (11, 111) ménagées dans les plaques d'actionnement (6, 106), sont agencés dans des positions excentriques telles que le parallélisme des plaques de serrage (1, 101) de la poutre de pression par rapport à la table de travail (B) de la machine de coupe peut être ajusté de manière précise.

5. Poutre de pression selon la revendication 1, caractérisée en ce que les rainures inclinées (11, 111) dans les plaques d'actionnement (6, 106) sont chacune agencées avec une partie d'extrémité supérieure (211) qui peut s'étendre horizontalement, ou peut être légèrement inclinée d'un côté, ou peut être munie d'un petit évidement, afin de maintenir de façon sûre les plaques de serrage (1, 101) dans leur position soulevée par les galets (12, 112) ayant été déplacés dans les parties d'extrémités respectives (211) des rainures inclinées (11, 111), même lorsque les ensembles formant cylindre et piston (9, 109) ne sont plus alimentées en fluide sous pression pour actionner les plaques d'actionnement (6, 106).

6. Poutre de pression selon la revendication 1, caractérisée en ce que les éléments (1, 101 ; 6, 106) de la poutre de pression disposés entre les montants d'extrémité latérale (4, 104) du bâti de la machine de coupe, sont logés dans un carter (14) autoporteur présentant sensiblement une section en U renversé et étant fixé sur les montants d'extrémité latérale (4, 104) du bâti de la machine de coupe, sur lesquels la plaque horizontale (15) est également fixée, le chariot (16) du dispositif d'alignement mobile (17) pouvant coulisser sur ladite plaque (15) , celle-ci pouvant, de toute manière appropriée, faire partie du carter (14), les faces intérieures du carter (14) pouvant coopérer avec un faible jeu avec les faces extérieures des plaques de serrage (1, 101) de la poutre de pression et avec les organes tubulaires profilés (2, 102) respectifs, et en ce qu'un conduit (19) est prévu à une extrémité du carter (14), au-dessus de ce dernier, ledit conduit étant relié à l'installation pour aspirer les sciures et poussières résultant des opérations de coupe.

7. Poutre de pression selon la revendication 1, caractérisée en ce que le dispositif de contrôle servant à mesurer le déplacement vers le bas des plaques de serrage (1, 101) et à monter en conséquence la lame circulaire (C), comprend, pour chaque plaque d'actionnement (6, 106), une rangée longitudinale de trous distincts également espacés (20, 120) avantageusement ménagés dans la partie d'extrémité desdites plaques située du côté des ensembles formant cylindre et piston (9, 109), lesdits trous (20, 120) étant détectés par des capteurs fixes (21, 121) avantageusement fixés sur la face extérieure des montants d'extrémité latérale (4) du bâti de la machine de coupe, et étant associés à un ordinateur qui commande la montée de la lame circulaire (C) en fonction de la mesure du déplacement vers le bas des plaques de serrage (1, 101) causé par les plaques d'actionnement (6, 106), et par conséquent en fonction de l'épaisseur du panneau ou de la pile de panneaux à découper, tout transducteur linéaire approprié du type connu pouvant bien entendu être utilisé à la place du dispositif de contrôle.

8. Poutre de pression selon la revendication 1, caractérisée en ce qu'un dispositif de blocage est avantageusement agencé aux parties d'extrémité des plaques d'actionnement (6, 106) reliées aux ensembles formant cylindre et piston (9, 109) et comporte : une petite glissière (22) avantageusement fixée à la partie d'extrémité de l'une (106) des plaques d'actionnement, au niveau du montant d'extrémité latérale (4) du bâti de la machine de coupe ; une barre coulissante (23) disposée orthogonalement à l'autre plaque d'actionnement (6), logée dans ladite glissière (22), et actionnée par un ensemble formant cylindre et piston (24), à double effet et fonctionnant au moyen d'un fluide sous pression, l'ensemble (24) étant fixé sur ladite glissière (22) ; une plaquette (25) fixée à l'autre plaque d'actionnement (6) en sorte de venir en saillie sur la face latérale de la plaque, côté barre coulissante (23), et disposée proche de ladite barre coulissante (23), la barre coulissante (23), lorsqu'actionnée par l'ensemble (24) formant cylindre et piston, étant pressée contre la face en regard de la plaquette (25), de sorte que la plaque de serrage (1 ou 101), qui a été déplacée avec un retard approprié après la plaque de serrage déplacée en premier, est bloquée par ladite barre coulissante (23) à une faible distance d'un panneau ou d'un empilement de panneaux en train d'être sectionné, et que le tuyau (19) par lequel la sciure est aspirée est obturé par la plaque de serrage bloquée.

9. Poutre de pression selon la revendication 1, caractérisée en ce que les deux plaques de serrage (1, 101) ne sont pas déplacées de manière indépendante l'une de l'autre, mais sont synchronisées, les plaques d'actionnement (6, 106) étant reliées, directement l'une à l'autre ou par l'interposition de moyens élastiques de compensation, à un seul ensemble formant cylindre et piston, à double effet et actionné par un fluide sous pression.
